# EUROPÄISCHE PATENTSCHRIFT

(11) **EP 0 502 593 B1**
(45) Veröffentlichungstag und Bekanntmachung des Hinweises auf die Patenterteilung: **24.08.1994**
(21) Anmeldenummer: 92250049.1
(22) Anmeldetag: 04.03.1992
(51) Int. Cl.: F16K 1/16

(54) **Vorrichtung zum Absperren grosser Rohrleitungen**
Shut-off device for large pipe lines
Dispositif pour l'obturation de grands conduits

(30) Priorität: 06.03.1991 DE 4107175
(43) Veröffentlichungstag der Anmeldung: 09.09.1992
(73) Patentinhaber: MANNESMANN Aktiengesellschaft, 40027 Düsseldorf (DE)
(72) Erfinder: Janich, Hans-Jürgen, W-4720 Beckum 2 (DE)
(74) Vertreter: Meissner, Peter E., Dipl.-Ing.

(56) Entgegenhaltungen:
- DE-A- 2 603 242
- DE-U- 8 522 309
- US-A- 3 525 328
- US-A- 3 696 804

## Beschreibung

Die Erfindung betrifft eine Vorrichtung zum Absperren großer Rohrleitungen, insbesondere von Heißgas-Rohrleitungen, entsprechend dem Oberbegriff des Anspruches 1.

Aus der DE-A- 22 44 972 ist bereits eine Vorrichtung gemäß dem Oberbegriff bekannt. Bei dieser bekannten Vorrichtung sind mehrere Drehklappen parallel zueinander in einem Rahmen angeordnet, deren Drehklappenwellen an ihren Enden jeweils einen geraden doppelarmigen Schwenkhebel aufweisen, an dessen Armen starre Schubstangen angreifen. Über diese Schubstangen, die über einen Antrieb betätigt werden, können die Hebel und damit unmittelbar auch die Drehklappen geschwenkt bzw. verstellt werden.

Jeder Schwenkhebel ist über zwei kurze Verbindungsstücke mit einem am Ende einer Drehklappenwelle befestigten Nabenstück gelenkig verbunden. Diese Gelenkverbindung ermöglicht es einerseits, daß eine Schwenk- bzw. Drehbewegung des Hebels unmittelbar auf die Drehklappen übertragen wird und andererseits eine Wärmedehnung des Rahmens, die eine Vergrößerung des Abstandes zwischen zwei Drehklappenwellen bewirkt, nicht zu unerwünschten Zugkräften in den Schubstangen führt. Dies wird dadurch erreicht, daß die Schwenkhebel einer Längendehnung des Rahmens durch Wegkippen ausweichen.

Dieses Wegkippen wird jedoch durch die Länge der kurzen Verbindungsstücke begrenzt. Sind insbesondere Drehklappen mit Breiten von wenigstens 2 m und/oder sind mehrere Drehklappen parallel zueinander vorgesehen, treten bei Temperaturen von beispielsweise 500 bis 600°C Wärmeausdehnungen im Rahmen auf, die nicht mehr durch Wegkippen der Hebel kompensiert werden können. Zwangsläufig treten dann enorme Zugkräfte in den Schubstangen auf, die gegebenenfalls zu Beschädigungen der Schubstangen, Gelenkverbindungen und Hebel führen.

Eine Verlängerung der Verbindungsstücke zwischen Schwenkhebel und Nabenstück auf der Drehklappenwelle würde zwar eine Vergrößerung der Ausgleichsbewegung bewirken, bedingt jedoch gleichzeitig das Auftreten von erheblichen Biege- und Torsionskräften in diesen Verbindungsstücken. Diese Kräfte sind selbst bei aufwendigen Versteifungen und Verrippungen kaum mehr beherrschbar. Besonders nachteilig wirkt sich eine derartige Verlängerung auch dadurch aus, daß ein erheblicher Verlust an Bauhöhe hingenommen werden muß. Bei der Anordnung derartiger Vorrichtungen zum Absperren großer Rohrleitungen ist jedoch oft nur sehr wenig Einbauplatz vorhanden, so daß eine Verlängerung der Verbindungsstücke unter Inkaufnahme der obigen Nachteile oftmals gar nicht oder nicht in ausreichendem Maße ausgeführt werden kann.

Der Erfindung liegt daher die Aufgabe zugrunde, eine Vorrichtung zum Absperren großer Rohrleitungen entsprechend dem Oberbegriff des Anspruches 1 derart weiterzuentwickeln, daß auch bei großen Drehklappenbreiten und/oder bei einer Vielzahl von hintereinander angeordneten Drehklappen und hohen Temperaturen noch ein einwandfreier Betrieb ohne Verlust an Bauhöhe möglich ist.

Erfindungsgemäß wird diese Aufgabe dadurch gelöst, daß der Schwenkhebel mit der Drehklappenwelle über wenigstens ein Zwischenelement derart beweglich gelagert ist, daß Abstandsveränderungen der Drehklappenwelle infolge thermischen Dehnungen des Rahmens gegenüber den Betätigungselementen durch Parallelverschiebung oder durch Parallelverschiebung mit gleichzeitiger Drehung des Schwenkhebels in einer zur Drehklappenwelle senkrechten Ebene ausgeglichen werden.

Weitere Merkmale der Erfindung sind Gegenstand der Unteransprüche und werden anhand der folgenden Beschreibung im Zusammenhang mit der Zeichnung näher erläutert.

In der Zeichnung zeigen:
- Fig.1: eine Seitenansicht eines ersten erfindungsgemäßen Ausführungsbeispieles,
- Fig.2: eine Teilansicht des ersten Ausführungsbeispieles,
- Fig.3: eine Schnittdarstellung längs der Linie III-III der Fig.2,
- Fig.4: eine Teilansicht eines zweiten Ausführungsbeispieles und
- Fig.5: eine Schnittdarstellung längs der Linie V-V der Fig.4.

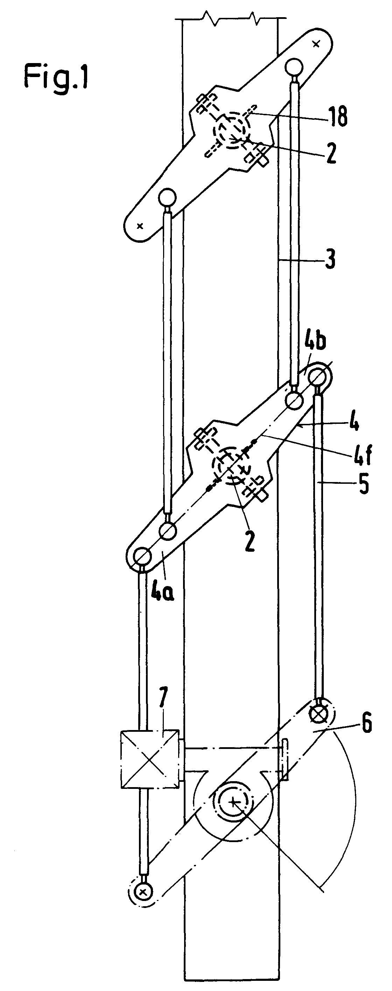

In den Fig.1 bis 3 ist ein erstes Ausführungsbeispiel einer erfindungsgemäßen Vorrichtung zum Absperren großer Rohrleitungen dargestellt. Diese Vorrichtung enthält im wesentlichen zwei durch einen gemeinsamen Antrieb 7 betätigbare, in der Zeichnung nicht dargestellte Drehklappen, deren Drehklappenwellen 2 parallel zueinander an einem Rahmen 3 gelagert sind, ferner einen mit jeder Drehklappenwelle 2 drehfest verbundenen doppelarmigen Schwenkhebel 4 sowie als Stangen ausgebildete Betätigungselemente 5, die mit den beiden Armen 4a, 4b des Schwenkhebels 4 gelenkig verbunden sind.

Ferner ist ein weiterer in Fig.1 strichpunktiert dargestellter Hebel 6 vorgesehen, der mit dem darüberliegenden Schwenkhebel 4 über die Betätigungselemente 5 verbunden ist. Mittels eines Antriebs 7 und des Hebels 6 ist eines der Betätigungselemente 5 bewegbar.

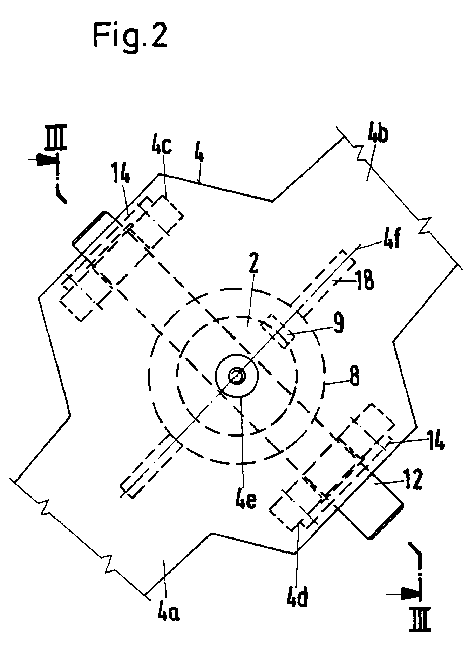

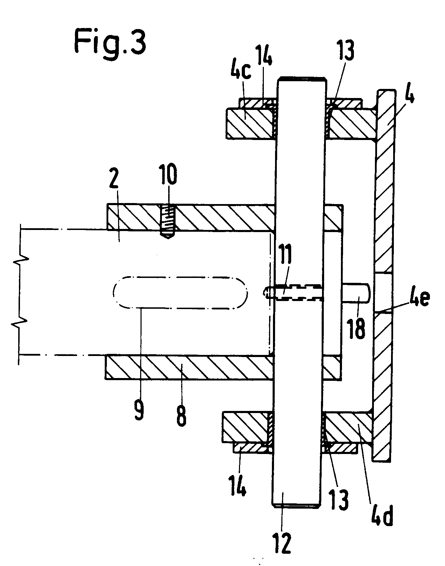

Aus den Fig.2 und 3 wird insbesondere die Verbindung zwischen Drehklappenwelle 2 und Schwenkhebel 4 deutlich. Auf das eine Ende der Drehklappenwelle 2 ist ein Nabenstück 8 aufgeschoben, das durch eine Paßfeder 9 und eine Madenschraube 10 auf der Drehklappenwelle 2 gesichert ist. Durch das Nabenstück 8 ist quer zur Drehklappenwelle ein als Bolzen 12 ausgebildetes Zwischenstück derart durchgeschoben, daß es mittig über die Stirnfläche der Drehklappenwelle 2 verläuft und mittig durch einen Zentrierstift 11 fixiert ist.

Der Schwenkhebel 4 weist ferner Ansätze 4c, 4d auf, in denen Lagerbuchsen 13 vorgesehen sind. Auf den abgewandten, äußeren Seiten der Ansätze 4c, 4d sind die Lagerbuchsen 13 durch Abdeckplatten 14 verdeckt. Bei der Montage wird der Bolzen 12 durch beide Lagerbuchsen 13 geführt, so daß dann der durch den Zentrierstift 11 und das Nabenstück 8 auf der Drehklappenwelle 2 fixierte Bolzen 12 eine gleitbewegliche Verschiebung zwischen Schwenkhebel 4 und Drehklappenwelle 2 in Längsrichtung des Bolzens ermöglicht. Der Zentrierstift 11 zur Fixierung des Bolzens 12 auf der Drehklappenwelle 2 ist über eine Bohrung 4e im Schwenkhebel 4 zugänglich.

Um ein Drehen oder Wegkippen des Schwenkhebels 4 um den Bolzen 12 zu verhindern, sind ferner zwei als Rippen ausgebildete Flacheisenstücke 18 an dem Nabenstück 8 befestigt.

Im Betrieb einer derartigen Vorrichtung zum Absperren großer Rohrleitungen, insbesondere von Heißgas-Rohrleitungen, treten oftmals durch das durchströmende heiße Gas Temperaturen von 500 bis 600°C an den Drehklappen und am Rahmen 3 auf. Dadurch bedingt treten Längendehnungen im Rahmen 3 auf, die eine Vergrößerung des Abstandes zwischen den Drehklappenwellen 2 zur Folge hat. Demgegenüber kommt es bei den außerhalb des Kanals angeordneten Schubstangen 5 und Schwenkhebeln 4 zu keinen wesentlichen Längendehnungen. Dies bedeutet, daß sich zwar der Abstand der Drehklappenwellen 2 verändert, der Abstand zwischen den Schwenkhebeln 4 jedoch gleich bleibt. Dieser Abstandsunterschied wird aber durch die bewegliche Verbindung zwischen Drehklappenwelle 2 und Schwenkhebel 4 ausgeglichen.

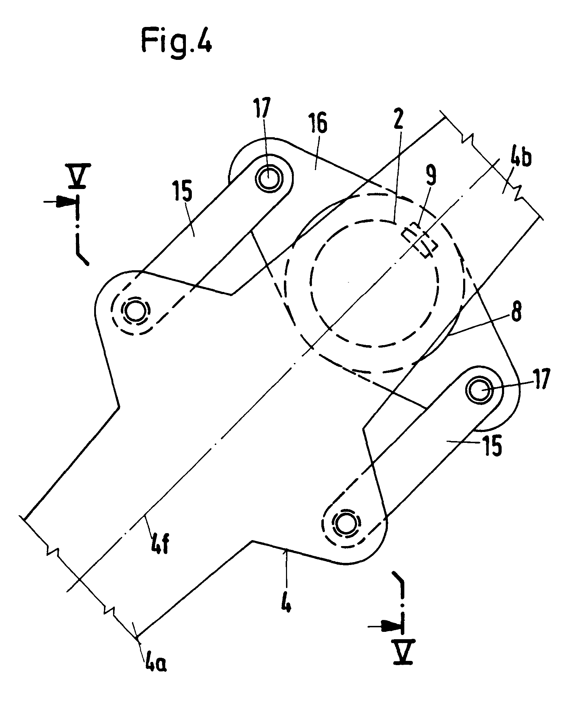

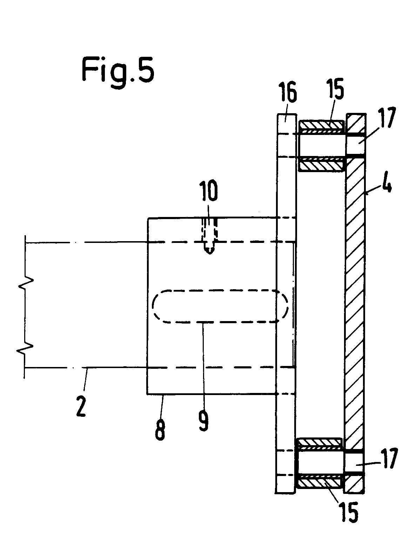

In den Fig.4 und 5 wird nun ein weiteres Ausführungsbeispiel gezeigt, wobei für gleiche Teile dieselben Bezugszeichen wie in den Fig.1 bis 3 verwendet werden.

Hierbei ist der Schwenkhebel 4 mit der Drehklappenwelle 2 über zwei als Lenker 15 ausgebildete Zwischenelemente derart verbunden, daß der Schwenkhebel 4, wie auch bei dem ersten Ausführungsbeispiel, in einer senkrecht zur Drehklappenwelle 2 verlaufenden Ebene beweglich ist.

In dieser senkrecht zur Drehklappenwelle 2 verlaufenden Ebene ist auf dem Nabenstück 8 eine Querschwinge 16 befestigt. Die Verbindung zwischen Drehklappenwelle 2 und Schwenkhebel 4 wird durch die beiden Lenker 15 ermöglicht. Diese Lenker 15 sind sowohl auf der Querschwinge 16 als auch am Schwenkhebel 4 durch parallel zur Drehklappenwelle 2 verlaufende kurze Bolzen 17 in einer senkrecht zur Drehklappenwelle 2 verlaufenden Ebene drehbar gelagert.

In beiden Ausführungsbeispielen (Fig.1 - 3; Fig.4 - 5) werden die Schwenkhebel 4 aufgrund von Längendehnungen des Rahmens 3 relativ zu den Drehklappenwellen 2 in einer senkrecht zu diesen verlaufenden Ebene und parallel zur Achse 4f des Schwenkhebels 4 verschoben. Während im ersten Ausführungsbeispiel (Fig.1-3) die einzelnen Schwenkhebel parallel zueinander in einer bestimmten Richtung, nämlich in Längsrichtung der Bolzen 12 bewegt werden, kommt im zweiten Ausführungsbeispiel (Fig.4 - 5) zu der Parallelverschiebung gleichzeitig eine durch die Lenker 15 überlagerte Bewegung auf einer Kreisbahn hinzu.

Mit Vorrichtungen gemäß den beiden Ausführungsbeispielen ist die in dem Rahmen 3 entstehende Längendehnung beherrschbar, ohne daß unerwünschte Biege- oder Torsionskräfte auftreten. Dadurch daß die Schwenkhebel 4 ihre Ausweichbewegungen in einer senkrecht zur Drehklappenwelle 2 verlaufenden Ebene durchführen, ist ferner kein größerer Einbauplatz notwendig.

Beim ersten Ausführungsbeispiel ist es statt der Verwendung eines einzigen als Bolzen 12 ausgebildeten Zwischenelementes auch möglich, beispielsweise zwei derartige Bolzen parallel zueinander vorzusehen. Bei einer Vorrichtung mit einem oder mehreren Schwenkhebeln 4 muß einer dieser Hebel fest angeordnet sein, um für die anderen Hebel als Widerlager zu dienen. Im ersten Ausführungsbeispiel übernimmt der in Fig.1 dargestellte Hebel 6 diese Funktion. Im Rahmen der Erfindung könnte dieser Hebel 6 jedoch auch als Schwenkhebel 4 ausgebildet sein, der dann jedoch starr auf seiner Drehklappenwelle zu befestigen wäre.

Gleichfalls können statt des Antriebes 7 andere Antriebsmöglichkeiten vorgesehen sein, wie z.B. ein Antrieb der Welle, auf der der Hebel 6 befestigt ist.

Im Rahmen der Erfindung sind statt der in Fig.1 dargestellten zwei Schwenkhebel 4 selbstverständlich auch Vorrichtungen mit nur einem Schwenkhebel oder mehr als zwei Schwenkhebeln denkbar.

## Patentansprüche

1. Vorrichtung zum Absperren großer Rohrleitungen, insbesondere von Heißgas-Rohrleitungen, enthaltend
a) wenigstens eine Drehklappe, deren Drehklappenwelle (2) durch einen Antrieb (7) drehbar in einem Rahmen (3) gelagert ist,
b) einen mit der Drehklappenwelle (2) drehfest verbundenen doppelarmigen Schwenkhebel (4),
c) Betätigungselemente (5), die mit den beiden Armen (4a, 4b) des Schwenkhebels (4) gelenkig verbunden sind,
**dadurch gekennzeichnet,**
d) daß der Schwenkhebel (4) mit der Drehklappenwelle (2) über wenigstens ein Zwischenelement (Bolzen 12; Lenker 15) derart beweglich gelagert ist, daß Abstandsveränderungen der Drehklappenwelle (2) infolge thermischer Dehnungen des Rahmens (3) gegenüber den Betätigungselementen (5) durch Parallelverschiebung oder durch Parallelverschiebung mit gleichzeitiger Drehung des Schwenkhebels (4) in einer zur Drehklappenwelle (2) senkrechten Ebene ausgeglichen werden.

2. Vorrichtung nach Anspruch 1, dadurch gekennzeichnet, daß das Zwischenelement durch einen fest mit der Drehklappenwelle (2) verbundenen Bolzen (12) gebildet wird.

3. Vorrichtung nach Anspruch 2, dadurch gekennzeichnet, daß der Schwenkhebel (4) mit dem Bolzen (12) in dessen Längsrichtung in gleitbeweglichem Eingriff steht.

4. Vorrichtung nach Anspruch 1, dadurch gekennzeichnet, daß das Zwischenelement mittels eines Nabenstücks (8) auf der Drehklappenwelle (2) befestigt ist.

5. Vorrichtung nach Anspruch 1, dadurch gekennzeichnet, daß zur Verbindung des Schwenkhebels (4) mit der Drehklappenwelle (2) zwei durch je einen Lenker (15) gebildete Zwischenelemente vorgesehen sind.

6. Vorrichtung nach Anspruch 5, dadurch gekennzeichnet, daß die beiden Lenker (15) jeweils am Schwenkhebel (4) und einer fest mit der Drehklappenwelle (2) verbundenen Querschwinge (16) drehbar gelagert sind.

## Claims

1. Device for shutting off large pipelines, in particular hot gas pipelines, comprising
a) at least one butterfly valve, the spindle (2) of which is rotatably mounted in a frame (3) via a drive (7),
b) a double-armed swivelling lever (4), which is non-rotatably connected to the butterfly valve spindle (2),
c) actuating members (5), which are hinged to the two arms (4a, 4b) of the swivelling lever (4),
characterised in that
d) the swivelling lever (4) is mounted with the butterfly valve spindle (2) in a mobile manner by means of at least one intermediate member (pin 12; link 15) so as to compensate for changes in the spacing of the butterfly valve spindle (2) due to thermal expansion of the frame (3) with respect to the actuating members (5) through a parallel displacement or a parallel displacement with simultaneous rotation of the swivelling lever (4) in a plane which is normal to the butterfly valve spindle (2).

2. Device according to claim 1, characterised in that the intermediate member is formed by a pin (12) which is firmly connected to the butterfly valve spindle (2).

3. Device according to claim 2, characterised in that the swivelling lever (4) is engaged with the pin (12) such that it can slide in the longitudinal direction of the latter.

4. Device according to claim 1, characterised in that the intermediate member is secured to the butterfly valve spindle (2) by means of a boss piece (8).

5. Device according to claim 1, characterised in that two intermediate members, which are each formed by a link (15), are provided to connect the swivelling lever (4) to the butterfly valve spindle (2).

6. Device according to claim 5, characterised in that the two links (15) are each rotatably mounted on the swivelling lever (4) and a transverse crank (16), which is firmly connected to the butterfly valve spindle (2).

## Revendications

1. Dispositif pour l'obturation de grandes conduites, en particulier des conduites pour gaz chaud, comportant
a) au moins un volet rotatif, dont l'arbre (2) est monté dans un bâti (3) de façon à pouvoir être entraîné en rotation par un entraînement (7),
b) un levier pivotant (4) à double bras relié, de manière solidaire en rotation, à l'arbre du volet rotatif (2),
c) des éléments d'actionnement (5) reliés de façon articulée aux deux bras (4a, 4b) du levier pivotant (4),
caractérisé en ce que
d) le levier pivotant (4) est monté de façon mobile avec l'arbre du volet rotatif (2) par l'intermédiaire d'au moins un élément intermédiaire (boulon 12 ; bras guideur 15) de sorte que des variations d'écartement de l'arbre du volet rotatif (2), par suite de dilatations thermiques du bâti (3), par rapport aux éléments d'actionnement (5), sont compensées par un déplacement parallèle, ou par un déplacement parallèle accompagné d'une rotation simultanée, du levier pivotant (4) dans un plan orthogonal à l'arbre du volet rotatif (2).

2. Dispositif selon la revendication 1,
caractérisé en ce que l'élément intermédiaire est formé d'un boulon (12) solidaire de l'arbre du volet rotatif (2).

3. Dispositif selon la revendication 2,
caractérisé en ce que le levier pivotant (4) est relié au boulon (12), sous forme d'un engagement mobile par coulissement, dans la direction longitudinale de celui-ci.

4. Dispositif selon la revendication 1,
caractérisé en ce que l'élément intermédiaire est fixé sur l'arbre du volet rotatif (2) au moyen d'une pièce de moyeu (8).

5. Dispositif selon la revendication 1,
caractérisé en ce que deux éléments intermédiaires formés à chaque fois par un bras guideur (15) sont prévus pour relier le levier pivotant (4) à l'arbre du volet rotatif (2).

6. Dispositif selon la revendication 5,
caractérisé en ce que les deux bras guideurs (15) sont montés à chaque fois, de façon rotative, sur le levier pivotant (4) et sur une lame transversale (16) solidaire de l'arbre du volet rotatif (2).
